# EUROPEAN PATENT APPLICATION

(11) **EP 3 285 414 A1**
(43) Date of publication of application: **21.02.2018**
(21) Application number: 15895192.1
(22) Date of filing: 16.06.2015
(51) Int. Cl.: H04J 3/06

(54) **SIGNAL CONVERSION METHOD, AND SIGNAL CONVERSION APPARATUS AND SYSTEM**

(71) Applicant: Huawei Technologies Co., Ltd., Longgang District Shenzhen, Guangdong 518129 (CN)
(72) Inventor: ZHU, Qiang, Shenzen Guangdong 518129 (CN); LI, Xingwen, Shenzen Guangdong 518129 (CN)
(74) Representative: Pfenning, Meinig & Partner mbB
(86) International application number: PCT/CN2015/081546
(87) International publication number: WO 2016/201619

(57) **Abstract**

Embodiments of the present invention disclose a signal conversion method, apparatus, and system, so as to reduce difficulty in waterproof design of an RRU, an area of a PCB, a size of the RRU, and costs of the RRU while enabling the RRU to receive a 1PPS synchronization signal. The method in the embodiments of the present invention includes: converting, by directly using the signal conversion apparatus, a frame format of an obtained 1PPS synchronization signal, to obtain a second synchronization signal, where a frame format of the second synchronization signal is a frame format supported by a CPRI; and transparently transmitting the converted-to second synchronization signal to the RRU by using an idle CPRI connector on an RRU.

## Description

### TECHNICAL FIELD

Embodiments of the present invention relates to the communications field, and in particular, to a signal conversion method, apparatus, and system.

### BACKGROUND

In a radio transmission system, a synchronization network needs to provide a reference clock signal to a transmission network, to ensure that no content is lost or distorted when information is being transmitted. In a time division duplex (Time Division Duplexing, TDD)/frequency division duplex (Frequency Division Duplexing, FDD) system, a standard pulse per second (pulse per second, 1PPS) based on coordinated universal time (Coordinated Universal Time, UTC) is obtained from a satellite in a synchronization manner, such as by using a Global Positioning System (Global Positioning System, GPS)/Global Navigation Satellite System (Global Navigation Satellite System, GLONASS)/BeiDou, is compared with a clock signal generated by a local oscillator of a base station, and is frequency-locked and phase-locked by software, to generate a protocol-compliant reference frequency signal for the system to use.

With application of services of Long Term Evolution Advanced (Long Term Evolution Advanced, LTE-A or LTE+), inter-site coordinated multiple points (Coordinated Multiple Points, Comp), inter cell interference coordination (Inter Cell Interference Coordination, ICIC), and so on, there are more scenarios in which a base station requires a GPS. A building base band unit (Base band Unite, BBU) can receive a Remote Global Positioning System (Remote Global Positioning System, RGPS) signal. However, in some application scenarios, due to factors such as an excessively long cabling distance or cabling infeasibility, an operator raises a requirement that a radio remote unit (Radio Remote Unit, RRU) is integrated with a GPS function or provides an RGPS interface, so that a GPS signal (mainly a 1PPS synchronization signal) is received by a nearby base station.

A currently used manner is that an RGPS physical interface and a processing circuit are added into an RRU, to integrate an application for receiving a GPS signal, into the RRU, and a dedicated power supply interface and signal interface are provided.

However, in practical application, not all RRUs need to be integrated with a GPS function. For example, a G/C/U/L multimode frequency division duplex (Frequency Divided Duplex, FDD) platform does not strongly require an RGPS. When an RGPS interface is added to an RRU for a few scenarios, a corresponding structure and a lightning protection circuit need to be added. This increases an area of a printed circuit board (Printed Circuit Board, PCB) and a size of the RRU.

### SUMMARY

Embodiments of the present invention provide a signal conversion method, apparatus, and system, so as to reduce an area of a PCB and a size of an RRU while enabling the RRU to receive a 1PPS synchronization signal.

A first aspect of the embodiments of the present invention provides a signal conversion method, where a signal conversion apparatus is connected to a remote radio unit RRU by using an idle common public radio interface CPRI connector on the RRU, and the method includes:
obtaining, by the signal conversion apparatus, a first synchronization signal, where the first synchronization signal is a pulse per second 1PPS synchronization signal;
converting, by the signal conversion apparatus, a frame format of the first synchronization signal, to obtain a second synchronization signal, where a frame format of the second synchronization signal is a frame format supported by a CPRI; and
transparently transmitting, by the signal conversion apparatus, the second synchronization signal to the RRU by using the CPRI connector.

With reference to the first aspect of the embodiments of the present invention, in a first implementation of the first aspect of the embodiments of the present invention, the signal conversion apparatus is connected to a Remote Global Positioning System RGPS module; and the obtaining, by the signal conversion apparatus, a first synchronization signal specifically includes:
receiving, by the signal conversion apparatus, the first synchronization signal sent by the RGPS module.

With reference to the first aspect of the embodiments of the present invention, in a second implementation of the first aspect of the embodiments of the present invention, the signal conversion apparatus is connected to a Global Positioning System GPS antenna; and
the obtaining, by the signal conversion apparatus, a first synchronization signal specifically includes:
receiving, by the signal conversion apparatus, a radio frequency GPS signal sent by the GPS antenna; and
demodulating, by the signal conversion apparatus, the radio frequency GPS signal to obtain the first synchronization signal.

With reference to the second implementation of the first aspect of the embodiments of the present invention, in a third implementation of the first aspect of the embodiments of the present invention, the GPS antenna is integrated into the signal conversion apparatus.

A second aspect of the embodiments of the present invention provides a signal conversion apparatus, including:
a first connection module, configured to connect to an RRU by using an idle CPRI connector on the RRU;
an obtaining module, configured to obtain a first synchronization signal, where the first synchronization signal is a pulse per second 1PPS synchronization signal;
a conversion module, configured to convert a frame format of the first synchronization signal obtained by the obtaining module, to obtain a second synchronization signal, where a frame format of the second synchronization signal is a frame format supported by a CPRI; and
a transparent transmission module, configured to transparently transmit, by using the CPRI connector, the converted-to second synchronization signal obtained by the conversion module to the RRU.

With reference to the second aspect of the embodiments of the present invention, in a first implementation of the second aspect of the embodiments of the present invention, the apparatus further includes:
a second connection module, configured to connect to an RGPS module; and
the obtaining module is specifically configured to receive the first synchronization signal sent by the RGPS module.

With reference to the second aspect of the embodiments of the present invention, in a second implementation of the second aspect of the embodiments of the present invention, the apparatus further includes:
a third connection module, configured to connect to a GPS antenna; and
the obtaining module specifically includes:
   a receiving unit, configured to receive a radio frequency GPS signal sent by the GPS antenna; and
   a demodulation unit, configured to demodulate the radio frequency GPS signal to obtain the first synchronization signal.

With reference to the second implementation of the second aspect of the embodiments of the present invention, in a third implementation of the second aspect of the embodiments of the present invention, the apparatus further includes:
the GPS antenna, configured to receive the radio frequency GPS signal and send the radio frequency GPS signal to the receiving unit.

A third aspect of the embodiments of the present invention provides a signal conversion apparatus, where the signal conversion apparatus is connected to an RRU by using an idle CPRI connector on the RRU, and the apparatus includes:
a processor, a memory, and a transceiver, where
by invoking an operation instruction stored in the memory, the processor is configured to execute the following steps:
   obtaining a first synchronization signal, where the first synchronization signal is a pulse per second 1PPS synchronization signal;
   converting the first synchronization signal into a second synchronization signal, where a frame format of the second synchronization signal is a frame format supported by a CPRI; and
   instructing the transceiver to transparently transmit, by using the CPRI, the second synchronization signal to the RRU.

With reference to the third aspect of the embodiments of the present invention, in a first implementation of the third aspect of the embodiments of the present invention, the signal conversion apparatus is connected to an RGPS module; and
when the processor executes the step of obtaining a first synchronization signal, the following step is specifically executed:
instructing the transceiver to receive the first synchronization signal sent by the RGPS module.

With reference to the third aspect of the embodiments of the present invention, in a second implementation of the third aspect of the embodiments of the present invention, the signal conversion apparatus is connected to a GPS antenna; and
when the processor executes the step of obtaining a first synchronization signal, the following steps are specifically executed:
instructing the transceiver to receive a radio frequency GPS signal sent by the GPS antenna; and
demodulating the radio frequency GPS signal to obtain the first synchronization signal.

With reference to the second implementation of the third aspect of the embodiments of the present invention, in a third implementation of the third aspect of the embodiments of the present invention, the GPS antenna is integrated into the signal conversion apparatus.

A fourth aspect of the embodiments of the present invention provides a signal conversion system, including:
an RRU, and the signal conversion apparatus according to any one of the second aspect to the third implementation of the second aspect of the embodiments of the present invention, or the signal conversion apparatus according to any one of the third aspect to the third implementation of the third aspect of the embodiments of the present invention.

In the embodiments of the present invention, the signal conversion apparatus is directly used to convert the frame format of the obtained 1PPS synchronization signal to obtain the second synchronization signal. The frame format of the second synchronization signal is a frame format supported by the CPRI. In addition, because the signal conversion apparatus is connected to the RRU by using the idle CPRI connector on the RRU, the signal conversion apparatus transparently transmits the converted-to second synchronization signal to the RRU by using the CPRI connector, enabling the RRU to receive an RGPS signal. Furthermore, because only the idle CPRI connector on the RRU needs to be used, no hardware upgrade or reconstruction needs to be performed on the RRU, and an area of a PCB and a size of the RRU are reduced.

### BRIEF DESCRIPTION OF DRAWINGS

FIG. 1 is a schematic diagram of a connection relationship between a signal conversion apparatus and other devices according to an embodiment of the present invention;
FIG. 2 is another schematic diagram of a connection relationship between a signal conversion apparatus and other devices according to an embodiment of the present invention;
FIG. 3 is another schematic diagram of a connection relationship between a signal conversion apparatus and other devices according to an embodiment of the present invention;
FIG. 4 is a schematic flowchart of a signal conversion method according to an embodiment of the present invention;
FIG. 5 is a schematic structural diagram of a signal conversion apparatus according to an embodiment of the present invention;
FIG. 6 is another schematic structural diagram of a signal conversion apparatus according to an embodiment of the present invention;
FIG. 7 is another schematic structural diagram of a signal conversion apparatus according to an embodiment of the present invention;
FIG. 8 is another schematic structural diagram of a signal conversion apparatus according to an embodiment of the present invention; and
FIG. 9 is another schematic structural diagram of a signal conversion apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons skilled in the art based on the embodiments of the present invention without creative efforts shall fall within the protection scope of the present invention.

In the embodiments of the present invention, a signal conversion apparatus receives an RGPS signal, converts a frame format of an obtained 1PPS synchronization signal into a CPRI frame format, connects to an RRU by using an idle CPRI connector on the RRU, and finally transparently transmits the 1PPS synchronization signal to a BBU by using the CPRI connector, so as to implement base station synchronization.

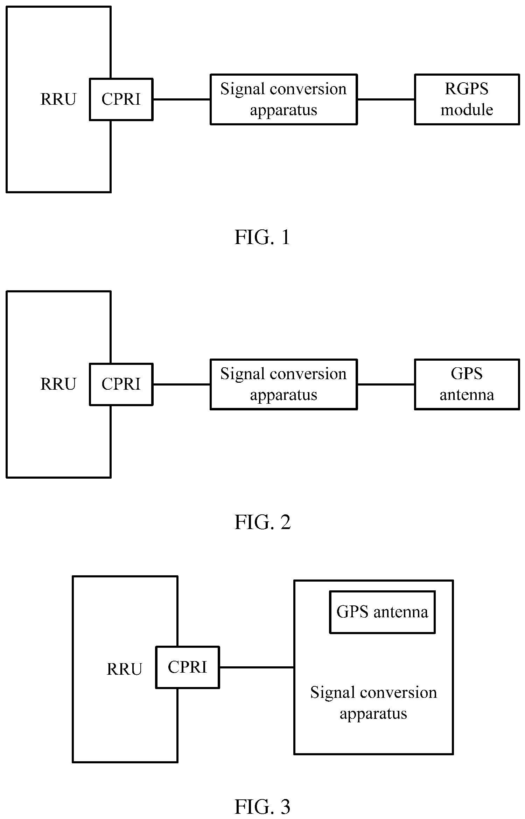

In the embodiments of the present invention, the signal conversion apparatus, the RRU, and another related device are connected in at least the following three manners:
Referring to FIG. 1, FIG. 1 is a schematic diagram of a connection relationship between a signal conversion apparatus and other devices according to an embodiment of the present invention. The signal conversion apparatus is connected to both an idle CPRI connector on an RRU and an RGPS module.

It may be understood that the RGPS module may be a commercially available RGPS module with a built-in GPS antenna. The RGPS module may directly demodulate a radio frequency GPS signal received by the GPS antenna into a 1PPS synchronization signal, and then send the 1PPS synchronization signal to the signal conversion apparatus. An interface for connecting the signal conversion apparatus and the RGPS module may be an electrical characteristic of a balanced voltage digital interface circuit (RS422) interface, or may be another interface supporting transmission of the 1PPS synchronization signal. This is not limited herein.

Referring to FIG. 2, FIG. 2 is another schematic diagram of a connection relationship between a signal conversion apparatus and other devices according to an embodiment of the present invention. The signal conversion apparatus is connected to both an idle CPRI connector on an RRU and a GPS antenna.

It may be understood that the GPS antenna may receive a radio frequency GPS signal and send the radio frequency GPS signal to the signal conversion apparatus.

Referring to FIG. 3, FIG. 3 is another schematic diagram of a connection relationship between a signal conversion apparatus and other devices according to an embodiment of the present invention. The signal conversion apparatus is connected to an idle CPRI connector on an RRU, the signal conversion apparatus has a built-in GPS antenna, and the GPS antenna may receive a radio frequency GPS signal. After receiving a radio frequency GPS signal, the built-in GPS antenna may send the radio frequency GPS signal to another module in the signal conversion apparatus for processing.

It should be noted that, in this embodiment of the present invention, three signals: the radio frequency GPS signal received by the GPS antenna, a first synchronization signal obtained by demodulating the GPS signal, and a second synchronization signal obtained by converting a frame format of the first synchronization signal include a 1PPS synchronization signal each, but the 1PPS synchronization signal is carried in the signals in different manners.

With reference to the foregoing connection relationships, the following describes a signal conversion method according to an embodiment of the present invention.

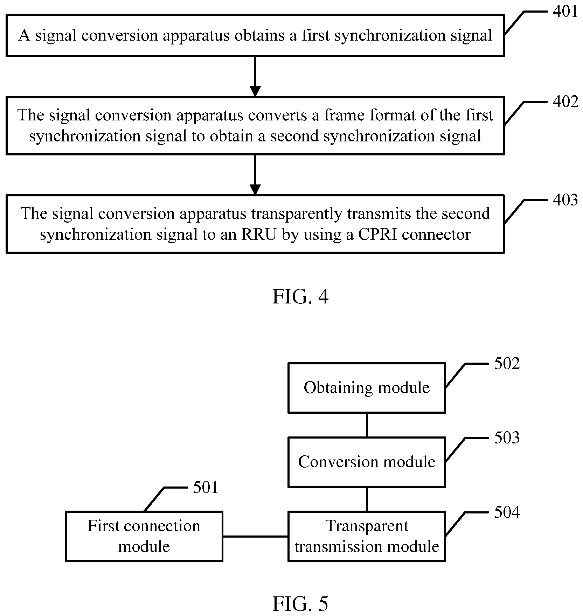

Referring to FIG. 4, an embodiment of a signal conversion method according to the embodiments of the present invention includes the following steps.

401. A signal conversion apparatus obtains a first synchronization signal, where the first synchronization signal is a pulse per second 1PPS synchronization signal.

In this step, a specific manner in which the signal conversion apparatus obtains the first synchronization signal varies according to different manners in which the signal conversion apparatus is connected to another device.

Optionally, if a connection manner shown in FIG. 1 is used, and the signal conversion apparatus is connected to an RGPS module, that a signal conversion apparatus obtains a first synchronization signal specifically includes: the signal conversion apparatus receives the first synchronization signal sent by the RGPS module.

Optionally, if a connection manner shown in FIG. 2 is used, and the signal conversion apparatus is connected to a GPS antenna, that a signal conversion apparatus obtains a first synchronization signal specifically includes: the signal conversion apparatus first receives a radio frequency GPS signal sent by the GPS antenna, and then demodulates the radio frequency GPS signal, to obtain the first synchronization signal.

Optionally, if a connection manner shown in FIG. 3 is used, and the signal conversion apparatus has a built-in GPS antenna, the built-in GPS antenna of the signal conversion apparatus first receives a radio frequency GPS signal, and then the radio frequency GPS signal is demodulated to obtain the first synchronization signal.

In practical application, according to a connection relationship between the signal conversion apparatus and another device, a specific manner for obtaining the first synchronization signal may be any one of the foregoing manners, and this is not limited herein.

402. The signal conversion apparatus converts a frame format of the first synchronization signal to obtain a second synchronization signal, where a frame format of the second synchronization signal is a frame format supported by a CPRI.

After obtaining the first synchronization signal, the signal conversion apparatus converts the frame format of the first synchronization signal to obtain the second synchronization signal. The frame format of the second synchronization signal is a frame format supported by a CPRI connector on an RRU.

For the frame format of the first synchronization signal:
it may be understood that, if the connection manner shown in FIG. 1 (the signal conversion apparatus is connected to an RGPS module) is used, for example, if the RGPS module is connected to the signal conversion apparatus by using an RS422 interface, the frame format of the first synchronization signal received by the signal conversion apparatus is a frame format supported by the RS422 interface. It should be noted that, in practical application, according to different interfaces used by the RGPS module, the signal conversion apparatus may also be connected to the RGPS module by using another interface, and this is not limited herein. In this case, the frame format of the first synchronization signal is a frame format supported by an interface used by the RGPS module to output the first synchronization signal, and a specific frame format is not limited herein.

Similarly, if the connection manner in FIG. 2 or FIG. 3 is used, in the first synchronization signal obtained by demodulating the radio frequency GPS signal by the signal conversion apparatus, the 1PPS synchronization signal may be carried by using multiple different frame formats, and this is not limited herein.

For the frame format of the second synchronization signal:
a protocol for the frame format supported by the CPRI includes both a common part and a private part to be defined by each vendor. Therefore, according to different private parts defined by vendors, frame formats supported by the CPRI are not the same, a specific frame format supported by the CPRI may be selected according to a practical application scenario, and this is not limited herein.

For converting the frame format of the first synchronization signal to obtain the second synchronization signal:
it should be noted that, according to different selected frame formats of the first synchronization signal and different selected frame formats of the second synchronization signal, specific conversion processes in which the first synchronization signal is converted into the second synchronization signal are not the same, and this is not limited herein.

403. The signal conversion apparatus transparently transmits the second synchronization signal to the RRU by using the CPRI connector.

After the signal conversion apparatus converts the frame format of the first synchronization signal and obtains the second synchronization signal whose frame format supports the CPRI, the signal conversion apparatus transparently transmits the second synchronization signal to the RRU by using the CPRI connector that is on the RRU and that is connected to the signal conversion apparatus.

In this embodiment of the present invention, the signal conversion apparatus is directly used to convert the frame format of the obtained 1PPS synchronization signal, to obtain the second synchronization signal. The frame format of the second synchronization signal is a frame format supported by the CPRI. In addition, because the signal conversion apparatus is connected to the RRU by using the idle CPRI connector on the RRU, the signal conversion apparatus transparently transmits the converted-to second synchronization signal to the RRU by using the CPRI connector, enabling the RRU to receive an RGPS signal. Furthermore, only the idle CPRI connector on the RRU needs to be used, and no hardware upgrade or reconstruction needs to be performed on the RRU. This reduces difficulty in waterproof design of the RRU, an area of a PCB, a size of the RRU, and costs of the RRU. In addition, for existing and new sites, according to different signal conversion apparatus solutions, the RGPS signal can be transparently transmitted to the RRU by using the CPRI, with no need to change the RRU hardware. This facilitates network-wide synchronization.

In practical application, after receiving the second synchronization signal transparently transmitted by the signal conversion apparatus, the RRU can transparently transmit the obtained 1PPS synchronization signal to a BBU, and the BBU completes phase discrimination on the 1PPS and a system clock. An initial phase deviation of the 1PPS of the RGPS is compared with an initial phase deviation of a 10 ms signal generated when the RRU is synchronized with the BBU, and subsequent processing is performed.

The signal conversion apparatus in the embodiments of the present invention is described in the following. Referring to FIG. 5, an embodiment of the signal conversion apparatus according to the embodiments of the present invention includes:
a first connection module 501, configured to connect to an RRU by using an idle CPRI connector on the RRU;
an obtaining module 502, configured to obtain a first synchronization signal, where the first synchronization signal is a pulse per second 1PPS synchronization signal;
a conversion module 503, configured to convert a frame format of the first synchronization signal obtained by the obtaining module 502, to obtain a second synchronization signal, where a frame format of the second synchronization signal is a frame format supported by a CPRI; and
a transparent transmission module 504, configured to transparently transmit, by using the CPRI connector, the converted-to second synchronization signal obtained by the conversion module 503 to the RRU.

In this embodiment of the present invention, the conversion module 503 is directly used to convert the frame format of the 1PPS synchronization signal obtained by the obtaining module 502, to obtain the second synchronization signal, where the frame format of the second synchronization signal is a frame format supported by the CPRI. In addition, the first connection module 501 is connected to the RRU by using the idle CPRI connector on the RRU, and the transparent transmission module 504 transparently transmits the converted-to second synchronization signal to the RRU by using the CPRI connector, enabling the RRU to receive an RGPS signal. Furthermore, only the idle CPRI connector on the RRU needs to be used, and no hardware upgrade or reconstruction needs to be performed on the RRU. This reduces difficulty in waterproof design of the RRU, an area of a PCB, a size of the RRU, and costs of the RRU.

In the foregoing embodiment, the obtaining module 502 obtains the first synchronization signal. In practical application, according to different connection manners in which the signal conversion apparatus is connected to an RGPS module or a GPS antenna, the obtaining module 502 may obtain the first synchronization signal in multiple specific manners.

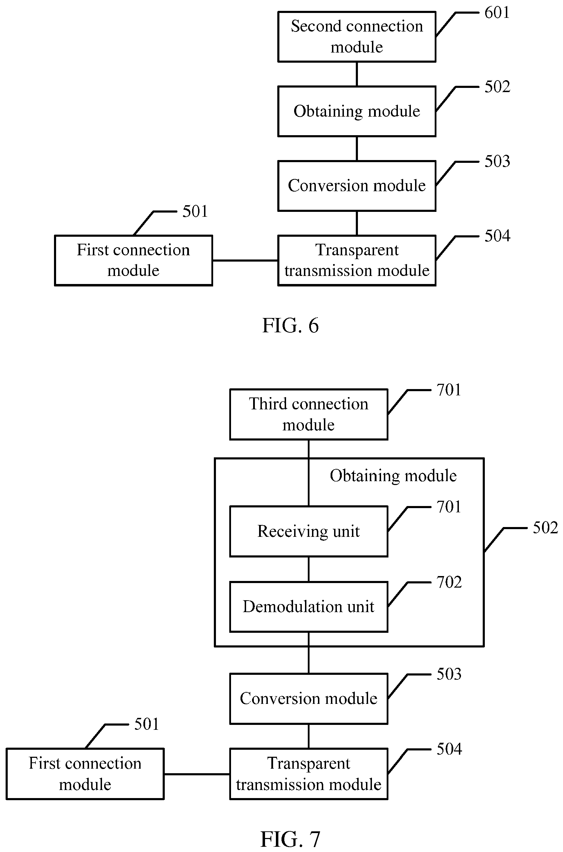

Optionally, referring to FIG. 6, in another embodiment of the signal conversion apparatus according to the embodiments of the present invention, the signal conversion apparatus in the embodiment shown in FIG. 5 further includes:
a second connection module 601, configured to connect to an RGPS module; and
the obtaining module 502 is specifically configured to receive the first synchronization signal sent by the RGPS module connected to the second connection module 601.

In this embodiment of the present invention, the second connection module 601 is connected to the RPGS module, and the obtaining module 502 directly receives the first synchronization signal without parsing a radio frequency GPS signal. This improves processing efficiency of the signal conversion apparatus. In addition, a commercially available modularized RGPS module is directly used, facilitating application on a large scale.

Optionally, referring to FIG. 7, in another embodiment of the signal conversion apparatus according to the embodiments of the present invention, the signal conversion apparatus in the embodiment shown in FIG. 5 further includes:
a third connection module 701, configured to connect to a GPS antenna; and
the obtaining module 502 specifically includes:
   a receiving unit 702, configured to receive a radio frequency GPS signal sent by the GPS antenna connected to the third connection module 701; and
   a demodulation unit 703, configured to demodulate the radio frequency GPS signal received by the receiving unit 702, to obtain the first synchronization signal.

In this embodiment of the present invention, the third connection module 701 is connected to the GPS antenna. After the receiving unit 702 receives the radio frequency GPS signal, the demodulation unit 703 demodulates the radio frequency GPS signal to obtain the first synchronization signal. In this way, the first synchronization signal can be obtained after processing without an RGPS module. This enables the signal conversion apparatus to better adapt to various practical application scenarios.

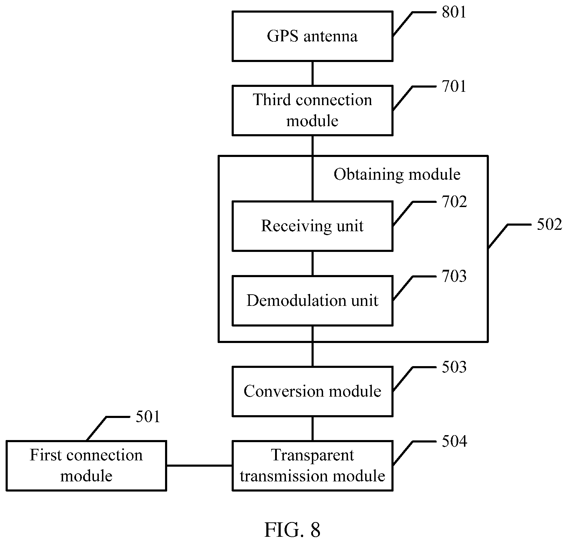

Optionally, referring to FIG. 8, in another embodiment of the signal conversion apparatus according to the embodiments of the present invention, the signal conversion apparatus in the embodiment shown in FIG. 7 further includes:
a GPS antenna 801, configured to receive a radio frequency GPS signal and send the radio frequency GPS signal to the receiving unit 601.

In this embodiment of the present invention, the GPS antenna 801 is integrated into the signal conversion apparatus, reducing installation space and improving adaptability of the signal conversion apparatus in different environments.

In the foregoing embodiments, for existing and new sites, different signal conversion apparatus solutions can be used to transparently transmit the RGPS signal to the RRU by using the CPRI, with no need to change the RRU hardware. This facilitates network-wide synchronization.

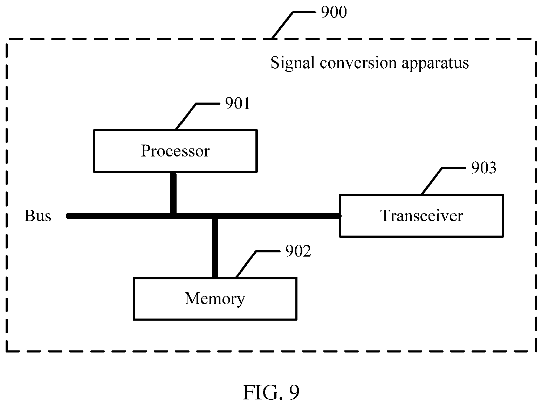

Referring to FIG. 9, in another embodiment of the signal conversion apparatus according to the embodiments of the present invention, the signal conversion apparatus is connected to an RRU by using an idle CPRI connector on the RRU. The signal conversion apparatus 900 includes:
a processor 901, a memory 902, and a transceiver 903.

In some embodiments of the present invention, the processor 901, the memory 902, and the transceiver 903 are connected by using a bus or in another manner. In FIG. 9, a bus connection is used as an example.

By invoking an operation instruction stored in the memory 902, the processor 901 is configured to execute the following steps:
obtaining a first synchronization signal, where the first synchronization signal is a pulse per second 1PPS synchronization signal;
converting the first synchronization signal into a second synchronization signal, where a frame format of the second synchronization signal is a frame format supported by a CPRI; and
instructing the transceiver 903 to transparently transmit the second synchronization signal to the RRU by using the CPRI connector.

In some embodiments of the present invention, the signal conversion apparatus is connected to an RGPS module.

When the processor 901 executes the step of obtaining a first synchronization signal, the following step is specifically executed:
instructing the transceiver 903 to receive the first synchronization signal sent by the RGPS module.

In some embodiments of the present invention, the signal conversion apparatus is connected to a GPS antenna.

When the processor 901 executes the step of obtaining a first synchronization signal, the following steps are specifically executed:
instructing the transceiver 903 to receive a radio frequency GPS signal sent by the GPS antenna; and
demodulating the radio frequency GPS signal to obtain the first synchronization signal.

In some embodiments of the present invention, the GPS antenna is integrated into the signal conversion apparatus.

An embodiment of the present invention further includes a signal conversion system, including:
an RRU, and the signal conversion apparatus according to any one of the embodiments shown in FIG. 5 to FIG. 9.

It may be clearly understood by persons skilled in the art that, for the purpose of convenient and brief description, for a detailed working process of the foregoing system, apparatus, and units, reference may be made to a corresponding process in the foregoing method embodiment, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be another division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A signal conversion method, wherein a signal conversion apparatus is connected to a remote radio unit RRU by using an idle common public radio interface CPRI connector on the RRU, and the method comprises:
obtaining, by the signal conversion apparatus, a first synchronization signal, wherein the first synchronization signal is a pulse per second 1PPS synchronization signal;
converting, by the signal conversion apparatus, a frame format of the first synchronization signal, to obtain a second synchronization signal, wherein a frame format of the second synchronization signal is a frame format supported by a CPRI; and
transparently transmitting, by the signal conversion apparatus, the second synchronization signal to the RRU by using the CPRI connector.

2. The method according to claim 1, wherein the signal conversion apparatus is connected to a Remote Global Positioning System RGPS module; and
the obtaining, by the signal conversion apparatus, a first synchronization signal specifically comprises:
receiving, by the signal conversion apparatus, the first synchronization signal sent by the RGPS module.

3. The method according to claim 1, wherein the signal conversion apparatus is connected to a Global Positioning System GPS antenna; and
the obtaining, by the signal conversion apparatus, a first synchronization signal specifically comprises:
receiving, by the signal conversion apparatus, a radio frequency GPS signal sent by the GPS antenna; and
demodulating, by the signal conversion apparatus, the radio frequency GPS signal to obtain the first synchronization signal.

4. The method according to claim 3, wherein the GPS antenna is integrated into the signal conversion apparatus.

5. A signal conversion apparatus, comprising:
a first connection module, configured to connect to an RRU by using an idle CPRI connector on the RRU;
an obtaining module, configured to obtain a first synchronization signal, wherein the first synchronization signal is a pulse per second 1PPS synchronization signal;
a conversion module, configured to convert a frame format of the first synchronization signal obtained by the obtaining module, to obtain a second synchronization signal, wherein a frame format of the second synchronization signal is a frame format supported by a CPRI; and
a transparent transmission module, configured to transparently transmit, by using the CPRI connector, the converted-to second synchronization signal obtained by the conversion module to the RRU.

6. The apparatus according to claim 5, wherein the apparatus further comprises:
a second connection module, configured to connect to an RGPS module; and
the obtaining module is specifically configured to receive the first synchronization signal sent by the RGPS module.

7. The apparatus according to claim 5, wherein the apparatus further comprises:
a third connection module, configured to connect to a GPS antenna; and
the obtaining module specifically comprises:
a receiving unit, configured to receive a radio frequency GPS signal sent by the GPS antenna; and
a demodulation unit, configured to demodulate the radio frequency GPS signal to obtain the first synchronization signal.

8. The apparatus according to claim 7, wherein the apparatus further comprises:
the GPS antenna, configured to receive the radio frequency GPS signal and send the radio frequency GPS signal to the receiving unit.

9. A signal conversion apparatus, wherein the signal conversion apparatus is connected to an RRU by using an idle CPRI connector on the RRU, and the apparatus comprises:
a processor, a memory, and a transceiver, wherein
by invoking an operation instruction stored in the memory, the processor is configured to execute the following steps:
obtaining a first synchronization signal, wherein the first synchronization signal is a pulse per second 1PPS synchronization signal;
converting the first synchronization signal into a second synchronization signal, wherein a frame format of the second synchronization signal is a frame format supported by a CPRI; and
instructing the transceiver to transparently transmit, by using the CPRI, the second synchronization signal to the RRU.

10. The apparatus according to claim 9, wherein the signal conversion apparatus is connected to an RGPS module; and
when the processor executes the step of obtaining a first synchronization signal, the following step is specifically executed:
instructing the transceiver to receive the first synchronization signal sent by the RGPS module.

11. The apparatus according to claim 9, wherein the signal conversion apparatus is connected to a GPS antenna; and
when the processor executes the step of obtaining a first synchronization signal, the following steps are specifically executed:
instructing the transceiver to receive a radio frequency GPS signal sent by the GPS antenna; and
demodulating the radio frequency GPS signal to obtain the first synchronization signal.

12. The apparatus according to claim 11, wherein the GPS antenna is integrated into the signal conversion apparatus.

13. A signal conversion system, comprising:
an RRU and the signal conversion apparatus according to any one of claims 5 to 13.
